# EUROPÄISCHE PATENTSCHRIFT

(11) **EP 4 146 410 B1**
(45) Veröffentlichungstag und Bekanntmachung des Hinweises auf die Patenterteilung: **03.07.2024**
(21) Anmeldenummer: 20727589.2
(22) Anmeldetag: 07.05.2020
(51) Int. Cl.: B08B 3/00, B08B 3/04, B08B 9/00, C09K 8/58, C11D 7/50, C11D 11/00, C09K 8/524

(54) **MITTEL ZUR VERFLÜSSIGUNG VON ROHÖL UND/ODER ZUR ENTFERNUNG VON ÖLRÜCKSTÄNDEN**
AGENT FOR LIQUEFYING CRUDE OIL AND/OR FOR REMOVING OIL RESIDUES
AGENT DE LIQUÉFACTION DE PÉTROLE BRUT ET/OU D'ÉLIMINATION DE RÉSIDUS D'HYDROCARBURES

(43) Veröffentlichungstag der Anmeldung: 15.03.2023
(73) Patentinhaber: Ehrl, Alwin, 85084 Langenbruck (DE); Ott, Rainer, 85053 Ingolstadt (DE)
(72) Erfinder: Ehrl, Alwin, 85084 Langenbruck (DE); Ott, Rainer, 85053 Ingolstadt (DE)
(74) Vertreter: Michalski Hüttermann & Partner Patentanwälte mbB
(86) Internationale Anmeldenummer: PCT/EP2020/062785
(87) Internationale Veröffentlichungsnummer: WO 2021/223870

(56) Entgegenhaltungen:
- EP-A1- 3 023 431
- EP-B1- 0 515 418
- WO-A2-2018/178402
- DE-A1-102007 014 732
- DE-B- 1 030 279
- US-A- 4 029 567

## Beschreibung

### Technisches Gebiet

Die Erfindung betrifft eine Zusammensetzung umfassend eine Fettsäure-Methylester-Komponente, Laurinsäure und eine Alkohol-Komponente. Weiterhin betrifft die Erfindung eine Mischung umfassend Rohöl, Ölschlamm und/oder Ölrückstände und die obige Zusammensetzung. Ferner betrifft die Erfindung ein Verfahren zum Verringern der Viskosität von Rohöl, Ölschlamm und/oder Ölrückständen. Weiterhin betrifft die Erfindung ein Verfahren zum Reinigen einer Oberfläche von Rohöl, Ölschlamm und/oder Ölrückständen.

### Hintergrund der Erfindung

Ein in der Rohölindustrie bis dato ungelöstes Problem ist das umweltfreundliche Entfernen von Ölrückständen und Ölschlamm, z. B. aus Lagertanks. Im Laufe der Zeit sammeln sich hoch viskose Ölkomponenten am Boden dieser Lagertanks, welche im Allgemeinen ein Fassungsvermögen von mehreren Tausend Kubikmetern besitzen.

Tanks für brennbare Flüssigkeiten, insbesondere Öltanks, wie Großöltanks, müssen aus Gründen der Inspektion wie auch bei starker Verschmutzung durch Sedimente nach mehrjährigem (3 bis 8 Jahren) Betrieb gereinigt werden. Beim Entleeren dieser Tanks verbleibt regelmäßig ein Restsumpf aus Ölschlamm und Ölrückständen.

Derzeit ist das gebräuchliche Verfahren für die Reinigung dieser Lagertanks die mechanische und chemische Entfernung von hoch viskosen oder festen Komponenten, bevor die Tanks erneut mit Öl befüllt werden. Diese Rückstände müssen, vergleichbar mit Teer, entsorgt werden, was umfangreiche Umsatzeinbußen und Belastungen für die Umwelt mit sich bringt.

Weiterhin gibt es bei der Förderung von Rohöl ungelöste Probleme. So wird Rohöl zur Förderung aus Lagerstätten gepumpt, wobei die Pumpfähigkeit des Rohöls auch von der Viskosität des Rohöls abhängt. Zu Beginn der Förderphase, in der sogenannten Primärförderung, ist ein Druck in der Lagerstätte ohne zusätzliche Maßnahmen hoch genug, um das Rohöl zu fördern, sei es durch Auspressen mithilfe des natürlich vorhandenen Lagerstättendruck oder durch Pumpen. Sinkt im Laufe der Förderung der Lagerstättendruck, kann der Druck durch künstliche Maßnahmen wie das Einpressen von Wasser in die Lagerstätte erhöht werden, um weiter Rohöl zu fördern, was als Sekundärförderung bezeichnet wird. Allerding erschwert das zunehmend zähe und dichte Öl, die weitere konstante Ölförderung. Unter Tertiärförderung werden Techniken der Ölförderung zusammengefasst, die eine Ölförderung über die mit primären und sekundären Methoden erzielbare Ölförderung ermöglichen. Ein Hauptziel der Tertiärförderung ist durch Injektion von Chemikalien mit hohem Druck das Öl an die Oberfläche zu drücken. Neben der rein mechanischen Wirkung der Chemikalien ist es weiterhin erwünscht, dass die Chemikalien die Viskosität des Rohöls verringern, damit sich die Pumpeigenschaften verbessern.

Das Dokument WO 2018/178402 A2 beschreibt eine Zusammensetzung zur Verringerung der Viskosität von Erdöl und Erdölrückständen sowie zum Lösen und Trennen von Erdöl und/oder Erdölrückständen von anderen flüssigen und/oder festen Stoffen.

Das Dokument US 4 029 567 A beschreibt ein Verfahren zur Entfernung mineralischer Stoffe aus einer gelösten Kohleaufschlämmung unter Zurückhaltung der Asphaltene in der Kohlelösung.

Das Dokument DE 10 2007 014732 A1 betrifft ein Verfahren zur Sanierung beschädigter Sichtbetonflächen. Dabei wird an der beschädigten Stelle der sichtbar werdende Betonuntergrund durch mechanische Bearbeitung freigelegt, diese freigelegte Oberfläche mit einem zement- und/oder kalkgebundenen Mörtel überzogen, diesen nach Abbinden einer mechanischen Bearbeitung durch Schleifen unterzogen, anschließend die behandelte Fläche gründlich von Staub gereinigt und darauf die Oberfläche mittels mindestens einer silikatischen Lasur mindestens einmal überzogen.

Das Dokument EP 3 023 431 A1 beschreibt konzentrierte Rhamnolipid-Zusammensetzungen sowie Verfahren zu ihrer Herstellung. Rhamnolipide sind grenzflächenaktive Glykolipide und Stoffwechselprodukte bestimmter Mikroorganismen. Sie verfügen über besondere tensidische Eigenschaften, wie z.B. starke Schaumbildung und sind für verschiedenste, technische Anwendungen interessant.

Das Dokument DE 10 30 279 B betrifft Bohrschlämme, wie sie beim rotierenden Bohren verwendet werden, und zwar Bohrschlämme auf der Basis von Öl-in-Wasser-Emulsionen mit verbesserten Schmiermitteleigenschaften und Verfahren zu ihrer Herstellung.

Das Dokument EP 0 515 418 B1 betrifft flüssige, nichtwässrige Reinigungsprodukte, insbesondere nichtwässrige, flüssige Waschmittelzusammensetzungen, die teilchenförmige Feststoffmaterialien enthalten.

### Beschreibung der Erfindung

Dementsprechend ist es eine Aufgabe der vorliegenden Erfindung, Mittel und Wege bereit zu stellen, welche die Viskosität von Rohöl verringern und somit die Reinigung von Öltanks und Oberflächen sowie die Förderung von Rohöl vereinfachen. Insbesondere gilt es Mittel bereitzustellen, die die weitere Verarbeitung des geförderten Rohöls nicht nachteilig beeinflussen. Ebenfalls soll die Reinigung von Öltanks und Oberflächen schonender, billiger, schneller, effizienter und/oder umweltverträglicher gestaltet sein.

Diese Aufgaben werden durch den Gegenstand der unabhängigen Ansprüche gelöst. Bevorzugte Weiterbildungen der Erfindung sind in den Unteransprüchen beschrieben.

Erfindungsgemäß wird somit eine Zusammensetzung bereitgestellt umfassend eine Fettsäure-Methylester-Komponente, eine Alkohol-Komponente und Laurinsäure, wobei die Zusammensetzung bei Normaldruck bei 20 °C flüssig ist, ein Gewichts-Anteil der Fettsäure-Methylester-Komponente ≥ 65 % bis≤ 95 %, bevorzugt ≥ 70 % bis ≤ 90 % bezogen auf das Gesamtgewicht der Zusammensetzung beträgt, ein Gewichts-Anteil der Alkohol-Komponente ≥ 5 % bis ≤ 35 % bezogen auf das Gesamtgewicht der Zusammensetzung beträgt, und die Zusammensetzung frei von Tensiden ist.

Unter Normaldruck wird vorliegend im Sinne der Erfindung der Druck bei 1 bar verstanden. Weiter bevorzugt ist die Zusammensetzung auch bei 1,01325 bar flüssig. Bevorzugt ist die Zusammensetzung nicht mit Wasser mischbar, wobei dies bedeutet, dass die Zusammensetzung nicht in Wasser löslich ist und somit beim Mischen mit Wasser keine homogene Mischung bildet. Bevorzugt bilden sich beim Mischen mit Wasser wenigstens zwei getrennte Phasen.

Bereitgestellt wird also eine Zusammensetzung zum Verringern der Viskosität von Rohöl, Ölschlamm und/oder Ölrückständen. Die Zusammensetzung verflüssigt feste Ölbestandteile wie Ölschlamm und/oder Ölrückstände und ermöglicht somit eine leichte Entfernung von Ölschlamm und/oder Ölrückständen. Weiterhin verringert die Zusammensetzung die Viskosität von bereits flüssigem Rohöl und macht somit hochviskoses Rohöl fließfähiger.

Die erfindungsgemäße Zusammensetzung ermöglicht eine Verringerung der Viskosität von Rohöl und eine Verflüssigung fester Bestanteile wie Ölschlamm und Ölrückstände. Somit ermöglicht die Zusammensetzung eine einfache Tankreinigung. Die Zusammensetzung ermöglicht es ferner Unternehmen, die planmäßigen Tankreinigungen nicht nur rechtzeitig, sondern schneller als nur mit konventionellen mechanischen Mitteln durchzuführen. Darüber hinaus hat die Zusammensetzung einen positiven Effekt auf die Recyclingfähigkeit des Ölschlamms und/oder der Ölrückstände, da ein Großteil des Ölschlamms und/oder der Rückstände raffiniert werden können. Somit wird die Umwelt geschützt, da der Ölschlamm und/oder die Ölrückstände keiner weiteren Spezialbehandlung oder Entsorgung unterzogen werden müssen. Weiterhin kann die erfindungsgemäße Zusammensetzung in der Rohölförderung insbesondere in der Tertiärförderung eingesetzt werden, um die Viskosität des Rohöls zu verringern und die Förderung zu verbessern.

Die Zusammensetzung vermindert bevorzugt die Oberflächenspannung des Rohöls, des Ölschlamms und/oder der Ölrückstände und verändert bevorzugt nicht die chemische Struktur der Moleküle des Rohöls, des Ölschlamms und/oder der Ölrückstände. In anderen Worten werden die organischen Kohlenwasserstoff-Atome des Rohöls, des Ölschlamms und/oder der Ölrückstände bevorzugt nicht wie beim katalytischen Cracken verändert.

Gemäß einer bevorzugten Weiterbildung der Erfindung beträgt der Gewichts-Anteil der Alkohol-Komponente ≥ 7 bis ≤ 28 % bezogen auf das Gesamtgewicht der Zusammensetzung. Es hat sich gezeigt, dass eine Zusammensetzung mit diesen Gewichts-Anteilen besonders effizient die Viskosität des Rohöls verringert, bzw. Ölrückstände und/oder Ölschlämme verflüssigt.

Hinsichtlich der Fettsäure-Methylester-Komponente ist gemäß einer bevorzugten Weiterbildung der Erfindung vorgesehen, dass die Fettsäure-Methylester-Komponente ausschließlich Methylester von Fettsäuren einer Länge zwischen 10 und 24 Kohlenstoffatomen, bevorzugt zwischen 10 und 18 Kohlstoffatome weiter bevorzugt zwischen 10 und 18 Kohlstoffatome in linearer Anordnung umfasst. In anderen Worten umfasst die Fettsäure-Methylester-Komponente bevorzugt Fettsäure-Methylester von unverzweigtkettigen Fettsäuren mit 10 bis 18 Kohlenstoffatomen.

In diesem Zusammenhang ist gemäß einer weiteren bevorzugten Weiterbildung vorgesehen, dass die Fettsäure-Methylester-Komponente einen oder mehrere Fettsäure-Methylester, ausgewählt aus
a) Hexadecansäuremethylester,
b) Octadecansäuremethylester,
c) 9-Octadecensäuremethylester,
d) 9,12-Octadecadiensäuremethylester und
e) 9,12,15-Octadecatrieensäuremethylester.
umfasst. Weitere Fettsäure-Methylester sind in der Zusammensetzung möglich.

Es hat sich gezeigt, dass die genannten Fettsäure-Methylester besonders gut geeignet sind die Viskosität des Rohöls zu verringern. Noch mehr bevorzugt weist die erfindungsgemäße Zusammensetzung alle Fettsäure-Methylester a) - e) in Kombination auf.

Grundsätzlich ist es möglich, die Zusammensetzung und insbesondere die Fettsäure-Methylester-Komponente aus synthetischem Leichtöl und/oder Rohöl herzustellen. Bevorzugt ist vorgesehen, dass die Zusammensetzung aus Sojaöl, Rapsöl, Palmöl, Talg oder gebrauchtem Frittierfett hergestellt wird bzw. herstellbar ist. Dies hat den Vorteil, dass die Herstellung der Zusammensetzung sehr ressourcenschonenden ist.

In anderen Worten wird die Zusammensetzung und insbesondere die Fettsäure-Methylester-Komponente bevorzugt aus einem biologischen Naturprodukt gewonnen. Als nachhaltig Rohstoffe kommen Sojaöl, Rapsöl oder auch Tierfette oder gebrauchtes Frittierfett in Frage.

Hinsichtlich der Alkohol-Komponente ist gemäß einer bevorzugten Weiterbildung der Erfindung vorgesehen, dass die Alkohol-Komponente einen oder mehrere monovalente C₂ bis C₄ Alkohole umfasst. Unter einem monovalenten Alkohol wird ein Alkohol verstanden der genau eine -OH Gruppe aufweist. Bevorzugt weist der monovalente Alkohol keine weiteren funktionellen Gruppen auf. Weiter bevorzugt ist die Alkohol-Komponente ausgewählt aus der Gruppe umfassend Ethanol,, n-Propanol, *iso*-Propanol, *n*-Butanol, *tert*-Butanol sowie Mischungen hiervon. Besonders bevorzugt sind Ethanol, *iso*-Propanol, *n*-Butanol, und *tert-*Butanol.

Gemäß der Erfindung umfasst die Zusammensetzung Laurinsäure. Insbesondere bei hochviskosem Rohöl, bei sehr hartnäckigen Ölrückständen und in der Tertiärförderung hat sich gezeigt, dass durch die Laurinsäure als Verflüssiger-Komponente die Viskosität des Rohöls sehr effektiv verringert werden kann, bzw. dass die Rückstände sehr schnelle verflüssigt werden können. Laurinsäure, auch als Dodecansäure bezeichnet ist eine gesättigte Fettsäure, die sich vom Alkan *n*-Dodecan ableitet.

Bevorzugt umfasst die Zusammensetzung zu einem Gewichts-Anteil von ≤ 4 % bevorzugt von ≤ 2 % bezogen auf das Gesamtgewicht der Zusammensetzung Laurinsäure. Diese Anteile haben sich als besonders effektiv zur Verringerung der Viskosität bzw. zur Verflüssigung des Rohöls herausgestellt.

Gemäß einer bevorzugten Weiterbildung der Erfindung umfasst die Zusammensetzung des weiteren Campher. Campher ist bevorzugt zu einem Gewichts-Anteil von 0,0015 % bezogen auf das Gesamtgewicht der Zusammensetzung in der Zusammensetzung enthalten.

Besonders bevorzugt umfasst die Zusammensetzung zu einem Gewichts-Anteil von 70 - 90 % die Fettsäure-Methylester-Komponente, zu einem Gewichts-Anteil von 7 - 27,9985 % die Alkohol-Komponente und zu einem Gewichts-Anteil von 2 % die Verflüssiger-Komponente jeweils bezogen auf das Gesamtgewicht der Zusammensetzung.

Weiter bevorzugt umfasst die Zusammensetzung zu einem Gewichts-Anteil von 70 - 90 % die Fettsäure-Methylester-Komponente, zu einem Gewichts-Anteil von 7 - 27,9985 die Alkohol-Komponente, zu einem Gewichts-Anteil von 2 % die Verflüssiger-Komponente und zu einem Gewichts-Anteil von 0,0015 % Campher, jeweils bezogen auf das Gesamtgewicht der Zusammensetzung.

Bevorzugt ist die Zusammensetzung nicht mit Wasser mischbar. In diesem Zusammenhang ist gemäß einer bevorzugten Weiterbildung der Erfindung vorgesehen, dass die Zusammensetzung in jedem Verhältnis mit Rohöl mischbar ist. In anderen Worten entsteht beim Mischen der Zusammensetzung mit Rohöl eine homogene Mischung, so dass keine getrennten Phasen vorliegen. Bevorzugt zeigt sich dieses Mischverhalten unabhängig der Anteile des Rohöls und der Zusammensetzung.

Ein Vorteil der Zusammensetzung liegt darin, dass die Zusammensetzung im Rohöl verbleiben kann. Sie stellt keine Minderung der Öleigenschaften dar und kann problemlos mit dem Rohöl raffiniert werden.

In diesem Kontext ist vorgesehen, dass die Zusammensetzung keine Tenside umfasst. Unter Tensiden sind vorliegend anionische Tenside, kationische Tenside und nichtionische Tenside zusammengefasst. Viele Zusammensetzungen, die im Stand der Technik bekannt sind, um Ölrückstände zu entfernen, umfassen Tenside, damit sich die Ölrückstände in Wasser dispergieren lassen. Die Tenside können allerdings einen nachteiligen Effekt auf das Rohöl haben, so dass sich das Rohöl nicht mehr wie üblich raffinieren lässt. Weiterhin müssen die Tenside bei der Entsorgung der Ölrückstände berücksichtig werden. Demnach hat der Verzicht auf Tenside in der Zusammensetzung den Vorteil, dass die Eigenschaften des Rohöls nicht beeinflusst werden.

Bevorzugt ist vorgesehen, dass die Zusammensetzung einen Siedebereich mit einem unteren Siedepunkt zwischen 300 und 600 °C bei Normaldruck aufweist. Weiter bevorzugt ist vorgesehen, dass die Zusammensetzung nicht oxidierend und/oder reduzieren ist. Ebenfalls ist bevorzug vorgesehen, dass die Zusammensetzung eine Dichte von 875-900 g/l aufweist und/oder eine Selbst-Entzündungstemperatur bevorzugt zwischen 120 und 180 °C beträgt. Weiter bevorzugt liegt die kinematische Viskosität der Zusammensetzung zwischen 3,5 und 5 cSt bei 40 °C, bestimmt nach EN ISO 3104.

Die erfindungsgemäßen Zusammensetzungen eignet sich somit besonders zur Reinigung von Behältern, welche mit Rohöl, Ölrückständen und/oder Ölschlamm insbesondere paraffinhaltige Öle, Schweröl oder Bitumen enthalten. Insbesondere eignet sich die Zusammensetzung zur Reinigung von Öltanks, bevorzugt Lagertanks für Rohöl.

Insbesondere eignet sich die Zusammensetzung zur Verringerung der Viskosität von hochviskosem Rohöl sowie zur Verflüssigung von festen Ölrückständen, insbesondere von Ölschlamm, Schweröl oder Bitumen.

Weiterhin betrifft die Erfindung eine Mischung umfassend Rohöl, Ölschlamm und/oder Ölrückstände und die obige Zusammensetzung. Bevorzugt ist die Mischung aus der Zusammensetzung und dem Rohöl, dem Ölschlamm und/oder den Ölrückständen eine homogene Mischung. Die Mischung weist verglichen mit dem Rohöl, dem Ölschlamm und/oder den Ölrückständen eine verringerte Viskosität und somit eine verbesserte Pumpfähigkeit auf.

Bevorzugt wird unter Rohöl Erdöl wie es natürlich in der Erdkruste vorkommt verstanden, sprich nicht weiterverarbeitetes Erdöl. Rohöl im Sinne der Erfindung umfasst also ein hauptsächlich aus Kohlenwasserstoffen bestehendes Stoffgemisch, das durch Umwandlungsprozesse organischer Stoffe entstanden ist. Unter Ölschlamm und Ölrückständen wird im Sinne der Erfindung sehr hochviskose und feste Bestandteil verstanden, die sich bei Lagerung des Rohöls absetzten. Beispiele für Ölrückstände sind Bitumen, Ölsand und Schweröl.

Weiter bevorzugt liegt die Zusammensetzung in einem Gewichts-Anteil von 2 - 10 % bezogen auf das Gewicht an Rohöl, Ölschlamm und/oder Ölrückständen in der Mischung vor. Es hat sich gezeigt das dieses Mischungsverhältnis die Pumpfähigkeit der Mischung besonders positiv beeinflusst.

Weiter bevorzugt wird die Alkohol-Komponente der Zusammensetzung auf die Art des Rohöls, des Ölschlamms und/oder der Ölrückstände und/oder eine Temperatur abgestimmt. Bei hochviskosem Rohöl ist die Alkohol-Komponente der Zusammensetzung bevorzugt *iso-*Propanol. Bei Ölsand ist die Alkohol-Komponente der Zusammensetzung bevorzugt Ethanol. Wird die Mischung in Situation eingesetzt bei denen eine Außentemperatur oder die Temperatur der Mischung über 25 °C liegt ist die Alkohol-Komponente der Zusammensetzung bevorzugt *n*-Butanol und/oder *tert*-Butanol.

Weiter bevorzugt wird die Verflüssiger-Komponente der Zusammensetzung auf die Art des Rohöls, des Ölschlamms und/oder der Ölrückstände abgestimmt. Bei hochviskosem Rohöl und/oder Ölsand ist die Verflüssiger-Komponente der Zusammensetzung bevorzugt Laurinsäure. Bei Ölschlaken und insbesondere bei hochviskosen Ölschlaken kann die Verflüssiger-Komponente bevorzugt Ethanolamin umfassen.

Die Mischung hat den Vorteil, dass Ablagerungen in Rohren, welche zum Transport der Mischung verwendet werden, vermindert werden. Weiterhin kann insbesondere an Flanschübergängen und Rohrmuffen weniger Heizenergie gegen Einfrieren der Rohre verwendet werden, da die Mischung auf längere Zeit flüssig bleibt. Durch das Herabsetzen der Viskosität im Vergleich zu Rohöl steigert sich die Fließgeschwindigkeit und es verlängern sich die Wartungsintervalle für Rohre und Bohrgestänge.

Weitere Vorteile der Zusammensetzung und der Mischung lassen sich wie folgt zusammenfassen:
- Ca. 90% bis 100 % der Ölrückstände können recycelt und raffiniert werden.
- Eine kostenintensive Entsorgung von Ölrückständen ist nicht mehr notwendig
- Eine kostenintensive Behandlung der Rückstände kann auf weniger als 10% der Ölrückstände reduziert werden.
- Die Zeiteinsparung spart erheblich viel Geld.
- Da ca. 90% der Ölrückstände recycelt werden können, wird die Umweltverschmutzung auf ein Minimum reduziert
- Die langsame mechanische Entfernung von hoch viskosen oder festen Komponenten kann unter Verwendung der Erfindung um 90% reduziert werden, was nahezu 65% der üblichen Zeit einspart.

Weiterhin betrifft die Erfindung ein Verfahren zum Verringern der Viskosität von Rohöl, Ölschlamm und/oder Ölrückständen umfassend die Schritte
- Bereitstellen von Rohöl, Ölschlamm und/oder Ölrückständen,
- Bereitstellen einer obigen Zusammensetzung,
- In Kontakt bringen der Zusammensetzung mit dem Rohöl, dem Ölschlamm und/oder den Ölrückständen.

Das Verfahren ermöglich auf einfache und effiziente Weise die Viskosität von Rohöl zu verringern und sehr hochviskose und feste Bestandteile des Rohöls zu verflüssigen. Unter Verringern der Viskosität wird vorliegend auch das Verflüssigen von festen Bestandteilen verstanden.

Gemäß einer bevorzugten Weiterbildung weist die Zusammensetzung beim In Kontakt bringen eine Temperatur zwischen -10 - 280 °C auf. Dies beschleunigt das Verringern der Viskosität, so dass das Verfahren besonders effizient ist.

Die Zusammensetzung kann bei unterschiedlichen Temperaturen verwendet werden, um die Viskosität zu verringern. Temperaturbereiche von -10° C bis zu 280 °C sind möglich. Beispielswiese kann das Verfahren auch bei Außentemperaturen im Minusbereich angewendet werden. In der Praxis ist dies vor allem zum Reinigen von Heizschleifen in Raffinerien interessant. Die Zusammensetzung bindet bevorzugt Rest-Wasser und Sauerstoff. Weiter bevorzugt weist die Zusammensetzung beim In Kontakt bringen eine Temperatur zwischen 20 - 60 °C auf. Dies ist insbesondere beim Verflüssigen von Ölrückständen in Öltanks oder auf Oberflächen interessant.

Gemäß einer weiteren bevorzugten Weiterbildung wird die Zusammensetzung in einem Gewichts-Anteil von 2 - 10 % bezogen auf das Gewicht an bereitgestelltem Rohöl, Ölschlamm und/oder Ölrückständen mit dem Rohöl, dem Ölschlamm und/oder den Ölrückständen in Kontakt gebracht. Es sind also zur Verringerung der Viskosität des Rohöls bzw. zur Verflüssigung fester Bestandteile nur geringe Mengen von der Zusammensetzung notwendig.

Gemäß einer weiteren bevorzugten Weiterbildung der Erfindung umfasst das Verfahren den Schritt Raffinieren einer durch das In Kontakt bringen entstandenen Mischung umfassend das Rohöl, den Ölschlamm und/oder die Ölrückständen und die Zusammensetzung. Das Verfahren weist den Vorteil auf, dass die Mischung mit den üblichen Verarbeitungsschritte für Rohöl wie Raffinieren weiterverarbeitete werden kann und die Zusammensetzung die Weiterverarbeitung nicht nachteilig beeinflusst.

Weiterhin betrifft die Erfindung ein Verfahren zum Reinigen einer Oberfläche von Rohöl, Ölschlamm und/oder Ölrückständen, umfassend die Schritte
a) Durchführen des obigen Verfahrens zum Verringern der Viskosität von Rohöl, Ölschlamm und/oder Ölrückständen an der Oberfläche,
b) Einwirken der Zusammensetzung auf das sich auf der Oberfläche befindende Rohöl, Ölschlamm und/oder Ölrückständen, derart dass ein flüssiges Produkt entsteht,
c) Entfernen des flüssigen Produktes von der Oberfläche, und
d) optional Reinigen der Oberfläche mit Wasser und/oder erneutes Aufbringen der Zusammensetzung auf die Oberfläche.

Mit dem Verfahren können Oberflächen von Werkzeugen, Ringschlüssels, Maulschlüssels, Motorräume, Tanksäulen, Fußböden, Wänden, Ölwannen, Schiffsrümpfe und ähnliches gereinigt werden.

Gemäß einer bevorzugten Weiterbildung ist die Oberfläche eine Innenfläche eines Öltanks, wobei Schritt a) ein Einbringen der Zusammensetzung in den Öltank umfasst, Schritt c) ein Abpumpen des flüssigen Produktes aus dem Öltank umfasst und Schritt d) ein erneutes Aufbringen der Zusammensetzung auf die Innenfläche des Öltanks umfasst. Das erneute Aufbringen der Zusammensetzung hat den Vorteil, dass es zukünftige Ablagerungen an der Innenfläche des Öltanks vermindert. Derart muss der Öltank weniger oft gereinigt werden.

### Kurze Beschreibung der Zeichnungen

Nachfolgend wird die Erfindung anhand eines bevorzugten Ausführungsbeispiels der Erfindung unter Bezugnahme auf die Zeichnungen weiter im Detail beschreiben.

In den Zeichnungen zeigen
- Fig. 1: Viskositätsmessungen von Mischungen aus Rohöl und einer Zusammensetzung zu unterschiedlichen Anteilen, gemäß einem nicht vom Schutzbereich der Erfindung umfassten Ausführungsbeispiel,
- Fig. 2: Viskositätsmessung einer Mischung aus Rohöl und einer Zusammensetzung, gemäß einem bevorzugten Ausführungsbeispiel der Erfindung und zum Vergleich eine Viskositätsmessung des Rohöls ohne Zusammensetzung,
- Fig. 3: eine Oberfläche vor während und nach einer Reinigung mit einer nicht vom Schutzbereich der Erfindung umfassten Zusammensetzung gemäß einem weiteren Ausführungsbeispiel.

### Detaillierte Beschreibung der Ausführungsbespiele

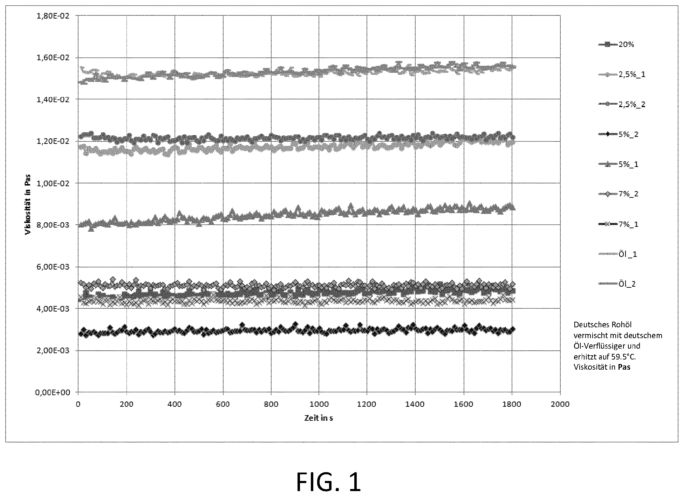

Figur 1 zeigt die Abnahme der Viskosität von deutschem Rohöl durch Zugabe der Zusammensetzung gemäß einem nicht vom Schutzbereich der Erfindung umfassten Ausführungsbeispiel. Die Zusammensetzung des ersten Ausführungsbeispiel wird im Folgenden als A1111 bezeichnet. A1111 ist ein Beispiel nicht gemäß der Erfindung und weist die folgende Zusammensetzung auf

| Komponenten | | Gewichts-Anteil bezogen auf Gesamtgewicht der Zusammensetzung |
|---|---|---|
| Fettsäure-Methylester-Komponente Mischung aus | | 90% |
| | a) Hexadecansäuremethylester, | |
| | b) Octadecansäuremethylester, | |
| | c) 9-Octadecensäuremethylester, | |
| | d) 9,12-Octadecadiensäuremethylester und | |
| | e) 9,12,15-Octadecatrieensäuremethylester | |
| Alkohol-Komponente: | | 9,9985 % |
| *iso*-Propanol | | |
| Campher | | 0,0015 % |

Mehrere Rohölproben von deutschem Rohöl wurden mit verschiedenen Mengen der Zusammensetzung A1111 vermischt. Die Mischungen wurden jeweils auf 59,5° C erhitzt und 5 Minuten bei 59,5° C gerührt. Anschließend wurde die dynamische Viskosität nach EN ISO 3219 ermittelt. Die Scherrate betrug jeweils 200 s⁻¹ und die Messzeit 30 Minuten bei einer Messtemperatur von 59,5 °C. Figur 1 zeigt die Viskosität, erhalten für die Mischungen von deutschem Rohöl, mit der Zusammensetzung A1111 bei 59,5°C mit unterschiedlichen Gewichts-Anteilen der Zusammensetzung an der Mischung, bezogen auf das Gewicht der Rohölprobe. Die höchste Viskosität zeigen die Rohölproben "Öl_1" und "Öl_2", denen kein A1111 beigemischt wurden. Signifikant geringere Viskositäten wurden bei Anteilen von 5 bis 7 % A1111 gefunden. Als Referenz diente eine Mischung aus Rohöl und A1111 mit 20 % Gewichts-Anteil A1111 bezogen auf das Gewicht des Rohöls. Die Messungen zeigen, dass eine Mischung von Rohöl mit A1111 mit mehr als 7 % Zusatz von A1111 bezogen auf das Gewicht des Rohöls die Viskosität nicht signifikant weiter verringert.

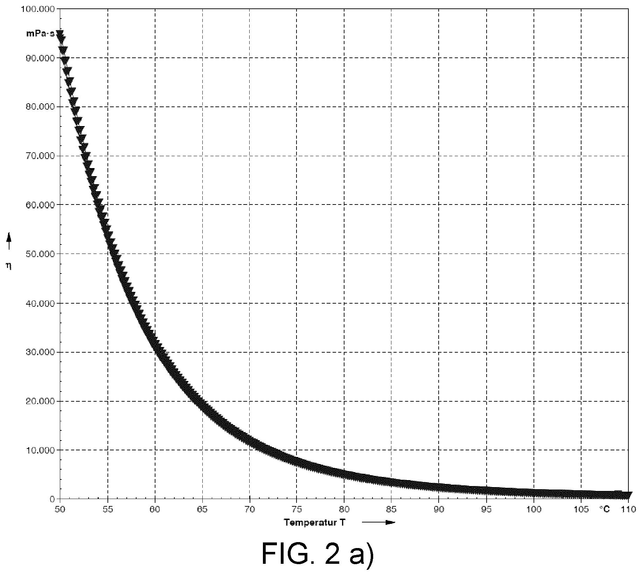

Figur 2a) und 2b) zeigen Viskositätsmessungen von Rohöl einmal ohne Zugabe einer Zusammensetzung (Figur 2a) und einmal mit Zugabe der Zusammensetzung gemäß einem bevorzugten Ausführungsbeispiel der Erfindung. Die Zusammensetzung des erfindungsgemäßen Ausführungsbeispiel wird im Folgenden als LIQUI bezeichnet. LIQUI weist die folgende Zusammensetzung auf:

| Komponenten | | Gewichts-Anteil bezogen auf Gesamtgewicht der Zusammensetzung |
|---|---|---|
| Fettsäure-Methylester-Komponente Mischung aus | | 70% |
| | a) Hexadecansäuremethylester, | |
| | b) Octadecansäuremethylester, | |
| | c) 9-Octadecensäuremethylester, | |
| | d) 9,12-Octadecadiensäuremethylester und | |
| | e) 9,12,15-Octadecatrieensäuremethylester | |
| Alkohol-Komponente: | | 27,9985 % |
| Mischung aus | | |
| Ethanol und Isopropanol | | |
| Campher | | 0,0015 % |
| Verflüssiger-Komponente: | | 2 % |
| Laurinsäure | | |

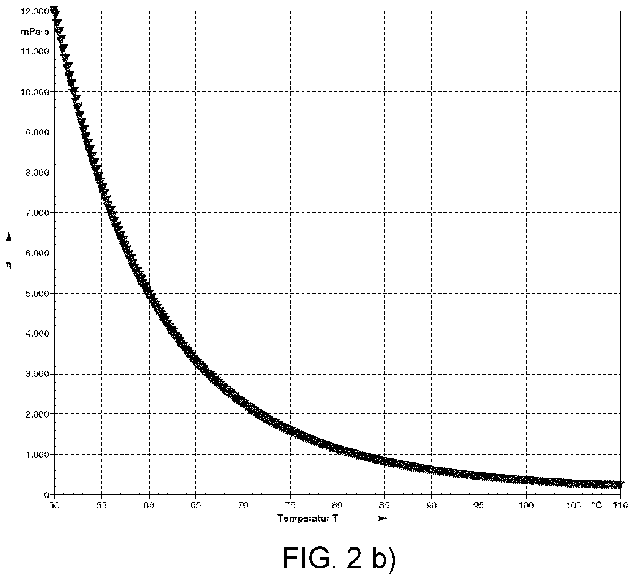

Die dynamische Viskosität der Rohölprobe wurde ermittelt nach EN ISO 3219, wobei die Ergebnisse in Figur 2a) dargestellt sind. Ebenfalls wurde der Rohölprobe LIQUI in einem Gewichts-Anteil von 7,5% bezogen auf die Mischung aus Rohöl und LIQUI zugesetzt und die dynamische Viskosität nach der genannten Vorschrift bestimmt (Figur 2b). Die dynamische Viskosität der Mischung aus Rohöl und LIQUI ist signifikant geringer. Beispielsweise beträgt die dynamische Viskosität bei 60 °C für die Rohölprobe ohne LIQUI 31,1 mPas und für die Mischung aus Rohöl und LIQUI 4,9 mPas.

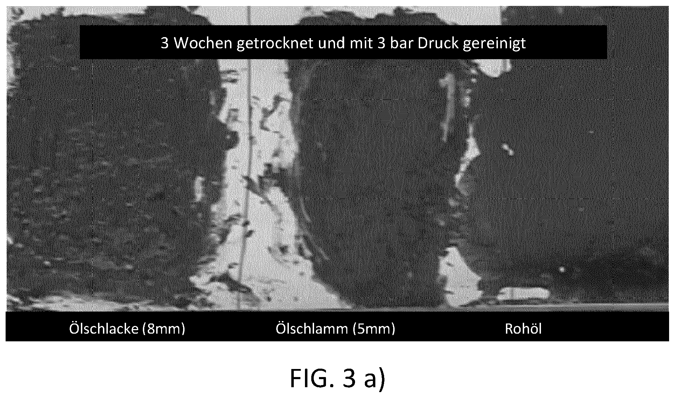

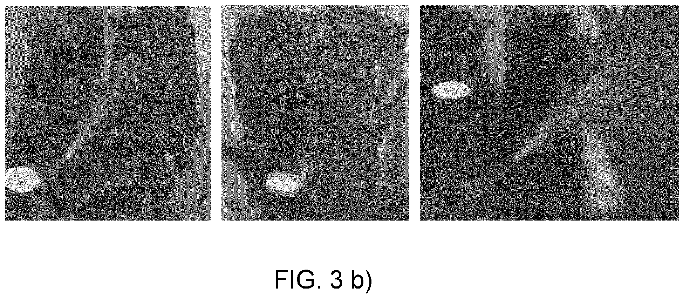

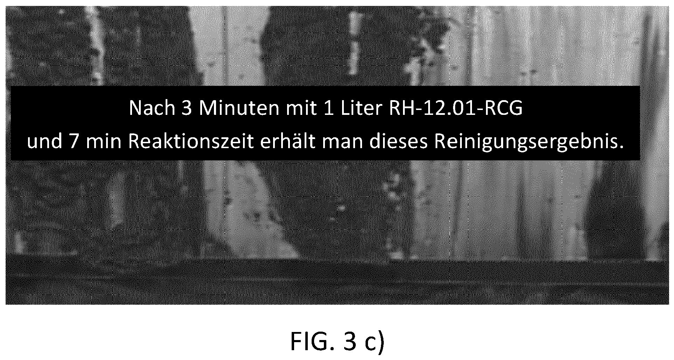

Figur 3 zeigt eine Reinigung von drei verschiedenen Ölverschmutzungen auf Stahlblech mit Hilfe einer Zusammensetzung gemäß einem dritten nicht vom Schutzbereich der Erfindung umfassten Ausführungsbeispiel.

Die Zusammensetzung des dritten Ausführungsbeispiel wird im Folgenden als RH-12.01-RCB bezeichnet. RH-12.01-RCB ist ein Beispiel nicht gemäß der Erfindung und weist die folgende Zusammensetzung auf

| Komponenten | | Gewichts-Anteil bezogen auf Gesamtgewicht der Zusammensetzung |
|---|---|---|
| Fettsäure-Methylester-Komponente Mischung aus | | 70% |
| | a) Hexadecansäuremethylester, | |
| | b) Octadecansäuremethylester, | |
| | c) 9-Octadecensäuremethylester, | |
| | d) 9,12-Octadecadiensäuremethylester und | |
| | e) 9,12,15-Octadecatrieensäuremethylester | |
| Alkohol-Komponente: | | 27,9985 % |
| Mischung aus | | |
| Ethanol und *iso*-Propanol | | |
| Campher | | 0,0015 % |
| Verflüssiger-Komponente: | | 2% |
| Ethanolamin | | |

Dargestellt sind in Figur 3 die Abbildungen vor der Reinigung (Figur 3 a) und nach der Reinigung (Figur 3 c). Man erkennt die nahezu quantitative Ablösung der Ölverschmutzung in allen drei Fällen. Die Menge der nicht entfernbaren Rückstände liegt lediglich zwischen 3 % und 8 % der gesamten Ölverschmutzung, in Abhängigkeit der Konsistenz der Ölverschmutzung.

Bei den Ölverschmutzungen in Figur 3 handelt es sich um folgende Ölverschmutzungen:
- deutscher Ölschlacke einer großen Raffinerie vermischt mit indischem Ölschlamm (I)
- stark paraffinhaltigem Ölschlamm aus Indien (II) und
- deutschem Rohöl aus Wietze (III).

Alle Ölverschmutzungen wurden auf ein großes Stahlblech mit 4 cm hohem Rand aufgetragen und liegend 3 Wochen in der Sonne getrocknet. Dann wurde die Reinigung am stehenden Blech durchgeführt.

Figur 3a zeigt von links nach rechts die "Mixed Waste" Ölschlacke 8 mm dick (I), danach den "Sludge" Ölschlamm 5 mm dick (II) und rechts das getrocknete Rohöl ca. 2,5 mm dick (III). Mit einem knappen Liter von RH-12.01-RCB wurden mit 2,8 bar Druck in 3 Minuten die Schlamm- und Schlackeschicht aufgebrochen und die Ölfläche gesäubert. Es verblieb eine Einwirkzeit von 7 Minuten nach dem Einsprühen. Figur 3c zeigt das Ergebnis der Behandlung.

Bei der Oberflächenreinigung spielen Faktoren wie Menge und Einwirkdauer keine so große Rolle wie bei der Ölverflüssigung in Öltanks, Schifftanks und Güter-Wagontanks. Hier kann man mit Einwirkzeiten oder hohem Düsendruck den harten Schlammsedimenten zu Leibe rücken. Obwohl die Zusammensetzung gemäß dem bevorzugten Ausführungsbeispiel einem hohen Bardruck standhält, benötigt man in der Realität weit weniger Druck als mit Wasser, da die Zusammensetzung nicht durch den Druck entscheidend reinigt. Tankwände älteren Datums werden geschont, da auch unter 90 bar gereinigt werden kann. Üblicherweise liegen die untersten Einstellstärken zwischen 90 und 180 bar.

Weitere Gebiete der Anwendung erschließen sich wie folgt:
Überall da, wo vormals Chemikalien oder Wasser eingesetzt wurden, kann die Zusammensetzung der Erfindung zur Reinigung verwendet werden. Dies betrifft insbesondere Tankspülungen, Eisenbahntanks, Schifftanks, welche einer Rohöl-Reinigung bedürfen.

In der Oberflächenreinigung sind folgende Anwendungen denkbar: Reinigung von Werkzeug, wie Ringschlüssel bzw. Maulschlüssel, Werkstattreinigung von verschmutzten Fußböden, Kachelwänden, Handwaschbecken, Werkbänken, rußverschmutzten Flächen und Eimern, Ölwannen, Kunststoffbehälter oder Motoradketten. Die Reinigung von Motoren bzw. des Motorraums (außen) ist möglich. Es ist ggf. wichtig die Oberflächen mit Wasser oder Dampfreiniger nachzuspülen.

Benzinbehaftete Oberflächen (z. B. Tanksäulen) sind gut reinigbar. Bevorzugt wird nach der Reinigung mit Wasser nachgespült. Bei Benzin-Lachen oder Öl-Lachen empfiehlt sich erst ein wenig von der Zusammensetzung dazuzugeben, kurz einwirken lassen und dann mit Saugmaterial abzustreuen. Eine kostengünstige gute Lösung sind z. B. Sägespäne.

Nach der Reinigung ölbehafteter Handflächen empfiehlt es sich mit Wasser gut nachzuspülen und Hände einzucremen.

Kupfer- und Messingteile werden bevorzugt nach der Anwendung der Zusammensetzung mit Wasser nachgespült.

Die Zusammensetzung kann ohne und mit Hochdruckreiniger eingesetzt werden, ohne weitere Chemikalien oder Wasser, um Werkzeug und Schiffs-Innenrümpfe zu reinigen. Dabei wurde festgestellt, dass nicht nur die Schiffswände sauber wurden, sondern sich auch die bis zu 2 Meter hohe Schlamm-Schicht (abgelagertes, verhärtetes Ölsediment) verflüssigte und somit wieder pumpfähig wurde.

Im Folgenden wird ein Verfahren zum Reinigen einer Oberfläche von Rohöl, Ölschlamm und/oder Ölrückständen, gemäß einem bevorzugten Ausführungsbeispiel anhand einer Tankreinigung beschrieben.

Die Zusammensetzung gemäß einem bevorzugten Ausführungsbeispiel der Erfindung wird in den Lagertanks durch die schon am Tank fest installierten Hochdrucksprühanlagen oder mit industriellen Hochdruckreinigern direkt als Reinigungsmittel verwendet. Sie beginnt schon beim Aufsprühen auf die Wandungen ihre verflüssigenden Eigenschaften zu entfalten. Sie wird mit dem hochviskosen Öl in einem Zirkulationsprozess solange im Umlauf gehalten und auf die Oberflächen gesprüht, bis die Wandungen der Tanks gereinigt sind. Anschließend wird die Zusammensetzung mit dem verflüssigten Ölschlamm nach einigen Reinigungsvorgängen aus dem Tank gepumpt. Sind die Wandungen des Tanks gereinigt, kann der Pumpvorgang mittels einer Saugschwimmer-Stutzen-Pumpe eingeleitet werden, sobald sich der verflüssigende Effekt auf die Menge an Schlamm entfaltet hat. Die Mischung wird über den Rückführungsprozess in und aus dem Tank gepumpt. Dies bedeutet wiederum, dass die hinzugefügte Zusammensetzung den Schlamm in ein pumpfähiges Produkt verwandelt hat. Dieser Umlauf wird fortgesetzt, bis alle Schlammschichten verflüssigt worden sind.

Der Einsatz von Rührwerken kann zur Beschleunigung des Verflüssigungsprozesses beitragen. Speziell nach Reinigen der Tankwände und vor Reinigen der Sohle in Abhängigkeit von dem Tanktyp können Rührwerke montiert werden. Die Verwendung dieser Einrichtungen beschleunigt den Prozess bedeutend. Nachdem das Produkt verflüssigt ist, kann die gesamte pumpfähige Flüssigkeit zur Raffinierung in die Raffinerie zurückgeleitet werden. Lediglich die nicht durch Pipelines pumpfähigen Substanzen müssen entsorgt werden. Dies ist die Grundlage für den ökonomischen Wert dieses Prozesses.

Eine bevorzugte Zusammensetzung der vorliegenden Erfindung hat folgende physikalische und chemische Eigenschaften.

| Physikalischer Zustand bei 20°C | | flüssig |
|---|---|---|
| Farbe | | farblos bis gelb |
| Geruch | | charakteristisch |
| pH-Wert | | 5-9 |
| Siedepunktsbereich | | 302,5°C - 570°C (ASTM D7169) |
| Schmelzbereich | | -34 - -25 °C |
| Flammpunkt | | 17 - 37 °C (ISO 13736:2008) |
| Selbstentzündungstemperatur | | 255-330°C (DIN 51794) |
| Dampfdruck, 20°C | | 2 - 6 hPa (DIN EN 16016-1) |
| Relative Dichte bei 20 °C | | 0,860 bis 0,895 g/ml (Din EN ISO 12185) |
| Wasserlöslichkeit (g/l) | | unlöslich |
| Kinematische Viskosität bei 40°C | | 3,50 bis 5,00 mm²/s |
| Dynamische Viskosität bei 20 °C | | 3,00 bis 4,00 mPas |
| Mischung aus | | |
| | • Hexadecansäuremethylester, | |
| | • Octadecansäuremethylester, | |
| | • 9-Octadecensäuremethylester, | |
| | • 9,12-Octadecadiensäuremethylester, | |
| | • 9,12,15-Octadecatrieensäuremethylester, | |
| | • Ethanol, | |

| | | |
|---|---|---|
| | • *n*-Propanol, | |
| | • *iso*-Propanol, | |
| | • *tert*-Butanol, | |
| | • Laurinsäure, | |
| | • Ethanolamin | |

## Patentansprüche

1. Eine Zusammensetzung umfassend eine Fettsäure-Methylester-Komponente, eine Alkohol-Komponente und Laurinsäure, wobei
die Zusammensetzung bei Normaldruck bei 20 °C flüssig ist,
ein Gewichts-Anteil der Fettsäure-Methylester-Komponente ≥ 65 % bis≤ 95 %, bevorzugt ≥ 70 % bis ≤ 90 % bezogen auf das Gesamtgewicht der Zusammensetzung beträgt,
ein Gewichts-Anteil der Alkohol-Komponente ≥ 5 % bis ≤ 35 % bezogen auf das Gesamtgewicht der Zusammensetzung beträgt, und
die Zusammensetzung frei von Tensiden ist.

2. Die Zusammensetzung gemäß dem vorhergehenden Anspruch wobei der Gewichts-Anteil der Alkohol-Komponente ≥ 7 bis ≤ 28 % bezogen auf das Gesamtgewicht der Zusammensetzung beträgt.

3. Die Zusammensetzung gemäß einem der vorhergehenden Ansprüche, wobei die Fettsäure-Methylester-Komponente ausschließlich Methylester von Fettsäuren einer Länge zwischen 10 und 24 Kohlenstoffatomen, bevorzugt zwischen 10 und 18 Kohlstoffatomen besonders bevorzugt zwischen 10 und 18 Kohlstoffatomen in linearer Anordnung umfasst.

4. Die Zusammensetzung gemäß einem der vorhergehenden Ansprüche, wobei die Alkohol-Komponente einen oder mehrere monovalente C₂ bis C₄ Alkohole umfasst.

5. Die Zusammensetzung gemäß einem der vorhergehenden Ansprüche, wobei ein Gewichts-Anteil der Laurinsäure≤ 4 % bevorzugt von ≤ 2 % bezogen auf das Gesamtgewicht der Zusammensetzung beträgt.

6. Die Zusammensetzung gemäß einem der vorhergehenden Ansprüche, wobei die Zusammensetzung bevorzugt zu einem Gewichts-Anteil von 0,0015 % bezogen auf das Gesamtgewicht der Zusammensetzung Campher umfasst.

7. Die Zusammensetzung gemäß einem der vorhergehenden Ansprüche, wobei die Zusammensetzung in jedem Verhältnis mit Rohöl mischbar ist.

8. Mischung umfassend Rohöl, Ölschlamm und/oder Ölrückstände und eine Zusammensetzung nach einem der vorhergehenden Ansprüche.

9. Mischung nach dem vorhergehenden Anspruch, wobei ein Gewichts-Anteil der Zusammensetzung bezogen auf das Gewicht an Rohöl, Ölschlamm und/oder Ölrückständen 2 - 10 % beträgt.

10. Verfahren zum Verringern der Viskosität von Rohöl, Ölschlamm und/oder Ölrückständen umfassend die Schritte
Bereitstellen von Rohöl, Ölschlamm und/oder Ölrückständen,
Bereitstellen einer Zusammensetzung nach einem der Ansprüche 1 bis 7,
In Kontakt bringen der Zusammensetzung mit dem Rohöl, dem Ölschlamm und/oder den Ölrückständen.

11. Verfahren nach dem vorhergehenden Verfahrensanspruch, wobei die Zusammensetzung beim In Kontakt bringen eine Temperatur zwischen -10 - 280 °C aufweist.

12. Verfahren zum Reinigen einer Oberfläche von Rohöl, Ölschlamm und/oder Ölrückständen, umfassend die Schritte
a) Durchführen des Verfahrens zum Verringern der Viskosität von Rohöl, Ölschlamm und/oder Ölrückständen nach einem der vorherigen Verfahrensansprüchen an der Oberfläche,
b) Einwirken der Zusammensetzung auf das sich auf der Oberfläche befindende Rohöl, Ölschlamm und/oder Ölrückständen, derart dass ein flüssiges Produkt entsteht,
c) Entfernen des flüssigen Produktes von der Oberfläche, und
d) optional Reinigen der Oberfläche mit Wasser und/oder erneutes Aufbringen der Zusammensetzung auf die Oberfläche.

13. Verfahren nach dem vorhergehenden Verfahrensanspruch, wobei die Oberfläche eine Innenfläche eines Öltanks ist, wobei Schritt a) ein Einbringen der Zusammensetzung in den Öltank umfasst, Schritt c) ein Abpumpen des flüssigen Produktes aus dem Öltank umfasst und Schritt d) ein erneutes Aufbringen der Zusammensetzung auf die Innenfläche des Öltanks umfasst.

## Claims

1. A composition, comprising a fatty acid methyl ester component, an alcohol component and lauric acid, wherein
the composition is liquid at normal pressure at 20°C,
a weight proportion of fatty acid methyl ester component ≥ 65% to ≤ 95%, preferably ≥ 70% to ≤ 90%, relative to the total weight of the composition,
a weight proportion of the alcohol component is ≥ 5% to ≤ 35% relative to the total weight of the composition, and
the composition is free of surfactants.

2. The composition according to the preceding claim, wherein the weight proportion of the alcohol component is ≥ 7% to ≤ 28%, relative to the total weight of the composition.

3. The composition according to any one of the preceding claims, wherein the fatty acid methyl ester component comprises exclusively methyl esters of fatty acids with a length of between 10 and 24 carbon atoms, preferably between 10 and 18 carbon atoms, particularly preferably between 10 and 18 carbon atoms in a linear arrangement.

4. The composition according to any one of the preceding claims, wherein the alcohol component comprises one or more monovalent C₂ to C₄ alcohols.

5. The composition according to any one of the preceding claims, wherein a weight proportion of lauric acid is ≤ 4%, preferably from ≤ 2%, relative to the total weight of the composition.

6. The composition according to any one of the preceding claims, wherein the composition preferably comprises camphor in a proportion by weight of 0.0015% relative to the total weight of the composition.

7. The composition according to any one of the preceding claims, wherein the composition is miscible with crude oil in any ratio.

8. A mixture comprising crude oil, oil sludge and/or oil residues and a composition according to any one of the preceding claims.

9. The mixture according to the preceding claim, wherein a proportion of the composition by weight, relative to the weight of crude oil, oil sludge and/or oil residues, is 2% - 10%.

10. A method for reducing the viscosity of crude oil, oil sludge and/or oil residues comprising the steps:
providing crude oil, oil sludge and/or oil residues,
providing a composition according to any one of claims 1 to 7,
bringing the composition into contact with the crude oil, the oil sludge and/or the oil residues.

11. The method according to the preceding method claim, wherein the composition has a temperature of between -10 - 280°C when brought into contact.

12. The method for cleaning a surface from crude oil, oil sludge and/or oil residues, comprising the steps:
a) performing the method for reducing the viscosity of crude oil, oil sludge and/or oil residues according to any one of the preceding method claims on the surface,
b) causing the composition to act on the crude oil, oil sludge and/or oil residues present on the surface, so that a liquid product is formed,
c) removing the liquid product from the surface, and
d) optionally cleaning the surface with water and/or reapplying the composition onto the surface.

13. The method according to the preceding method claim, wherein the surface is an inner surface of an oil tank, wherein step a) comprises introducing the composition into the oil tank, step c) comprises pumping the liquid product out of the oil tank and step d) comprises reapplying the composition onto the inner surface of the oil tank.

## Revendications

1. Composition comprenant un composant ester méthylique d'acide gras, un composant alcool et de l'acide laurique, où
la composition est liquide à 20 °C à la pression normale,
une proportion en poids du composant ester méthylique d'acide gras est ≥ 65 % à ≤ 95 %, de préférence ≥ 70 % à ≤ 90 %, par rapport au poids total de la composition,
une proportion en poids du composant alcool est ≥ 5 % à ≤ 35 % par rapport au poids total de la composition, et
la composition est exempte de tensioactifs.

2. Composition selon la revendication précédente, dans laquelle la proportion en poids du composant alcool est ≥7 à ≤ 28 % par rapport au poids total de la composition.

3. Composition selon l'une des revendications précédentes, dans laquelle le composant ester méthylique d'acide gras comprend exclusivement des esters méthyliques d'acides gras ayant une longueur entre 10 et 24 atomes de carbone, de préférence, entre 10 et 18 atomes de carbone, de manière particulièrement préférée, entre 10 et 18 atomes de carbone, dans un agencement linéaire.

4. Composition selon l'une des revendications précédentes, dans laquelle le composant alcool comprend un ou plusieurs alcools en C₂ à C₄ monovalents.

5. Composition selon l'une des revendications précédentes, dans laquelle une proportion en poids d'acide laurique est ≤ 4 %, de préférence, ≤ 2 %, par rapport au poids total de la composition.

6. Composition selon l'une des revendications précédentes, où la composition comprend de préférence du camphre dans une proportion en poids de 0,0015 % par rapport au poids total de la composition.

7. Composition selon l'une des revendications précédentes, où la composition est miscible avec du pétrole brut dans n'importe quelle proportion.

8. Mélange comprenant du pétrole brut, de la boue de pétrole et/ou des résidus de pétrole et une composition selon l'une des revendications précédentes.

9. Mélange selon la revendication précédente, dans lequel une proportion en poids de composition par rapport au poids de pétrole brut, de boue de pétrole et/ou de résidus de pétrole est de 2 à 10 %.

10. Procédé permettant de diminuer la viscosité de pétrole brut, de boue de pétrole et/ou de résidus de pétrole comprenant les étapes
de fourniture de pétrole brut, de boue de pétrole et/ou de résidus de pétrole,
de fourniture d'une composition selon l'une des revendications 1 à 7,
de mise en contact de la composition avec le pétrole brut, la boue de pétrole et/ou les résidus de pétrole.

11. Procédé selon la revendication précédente, dans lequel la composition présente une température entre -10 et 280 ° C lors de la mise en contact.

12. Procédé de nettoyage d'une surface avec du pétrole brut, de la boue de pétrole et/ou des résidus de pétrole, comprenant les étapes
a) d'exécution du procédé permettant la diminution de la viscosité du pétrole brut, de la boue de pétrole et/ou des résidus de pétrole selon d'une des revendications de procédé précédentes sur la surface,
b) d'action de la composition sur le pétrole brut, la boue de pétrole et/ou les résidus de pétrole se trouvant sur la surface de sorte qu'un produit liquide se forme,
c) de retrait du produit liquide de la surface, et
d) de nettoyage éventuel de la surface avec de l'eau et/ou un nouvel apport de composition sur la surface.

13. Procédé selon la revendication précédente, dans lequel la surface est la surface intérieure d'un réservoir de pétrole, dans lequel l'étape a) comprend un apport de la composition dans le réservoir de pétrole, l'étape c) comprend le pompage du produit liquide à partir du réservoir de pétrole et l'étape d) comprend un nouvel apport de la composition sur la surface intérieure du réservoir de pétrole.
